# EUROPÄISCHE PATENTANMELDUNG

(11) **EP 1 120 621 A1**
(43) Veröffentlichungstag der Anmeldung: **01.08.2001**
(21) Anmeldenummer: 00125725.2
(22) Anmeldetag: 24.11.2000
(51) Int. Cl.: F28D 9/00, H01M 8/06, F23K 5/22

(54) **Vorrichtung zum Verdampfen und/oder Überhitzen eines Mediums**

(30) Priorität: 26.01.2000 DE 10003273
(71) Anmelder: XCELLSIS GmbH, 73230 Kirchheim / Teck-Nabern (DE)
(72) Erfinder: Motzet, Bruno, 73235 Weilheim/Teck (DE); Tischler, Alois, 94501 Aidenbach (DE); Weisser, Marc, 73277 Owen/T. (DE)
(74) Vertreter: Kocher, Klaus-Peter Dipl.-Phys

(57) **Zusammenfassung**

Eine Vorrichtung dient zum Verdampfen und/oder Überhitzen eines Mediums, insbesondere eines Kohlenwasserstoffs oder eines Kohlenwasserstoff/Wasser-Gemischs für ein Gaserzeugungssystem einer Brennstoffzellenanlage, mit einem Wärmetauscher. Der Wärmetauscher weist in seinem medienseitigen Bereich mindestens ein Folienpaar (5) sowie jeweils eine Eintritts- (2) und Austrittsöffnung (3) auf, welche jeweils mit einem Medienraum (7) zwischen den beiden Folien (5a,5b) des wenigstens einen Folienpaars (5) verbunden sind. Der medienseitige Bereich steht in wärmeleitendem Kontakt zu einem wärmeträgerseitigen Bereich (10). Der Medienraum (7) ist zwischen den beiden Folien (5a,5b) durch auf der dem Medium zugewandten Seite wenigstens einer der Folien eingebrachte Vertiefungen (8) gebildet. Die dem Medium abgewandte Oberfläche jeweils wenigstens einer der Folien (5a,5b) des wenigstens einen Folienpaars (5) ist mit Wärmeleitrippen (6) versehen, wobei die Höhe der Wärmeleitrippen größer als die Tiefe der Vertiefungen ist.

## Beschreibung

Die Erfindung betrifft eine Vorrichtung zum Verdampfen und/oder Überhitzen eines Mediums nach der im Oberbegriff von Anspruch 1 näher definierten Art.

Aus der DE 44 26 692 C1 ist eine zweistufige Verdampfereinheit zum Überführen eines in Abhängigkeit einer Lastvorgabe einstellbaren flüssigen Reaktant-Massenstroms in einen gasförmigen Reaktant-Massenstrom beschrieben, wobei der flüssige Reaktant-Massenstrom mit Hilfe eines Wärmeträgermediums in der ersten Stufe zumindest teilweise verdampft und in der zweiten Stufe gegebenenfalls vollständig verdampft und anschließend überhitzt wird. Die Verdampfereinheit ist dabei durch ein abwechselndes Aufeinanderstapeln von Folien mit Wärmeträgerkanälen und von Folien mit Reaktionskanälen ausgebildet.

Weitere Wärmetauscher, welche als Verdampfereinheit genutzt werden können, sind aus dem allgemeinen Stand der Technik bekannt. Dabei handelt es sich beispielsweise um Plattenwärmetauscher mit umgeformten Blechen, welche eine Wellstruktur aufweisen, um Stab/Plattenbeziehungsweise Platten/Lamellen-Wärmetauscher, oder um Schichtwärmetauscher. Die Beheizung kann mittels flüssigen und/oder gasförmigen Medien erfolgen.

Insbesondere für den Einsatz zum Verdampfen von Kohlenwasserstoffen oder Kohlenwasserstoff/Wasser-Gemischen, wie beispielsweise für Gaserzeugungssysteme, ist der Betrieb von derartigen Verdampfern mit entsprechenden Problemen verbunden. Da insbesondere beim Einsatz in mobilen Anlagen häufig Lastwechsel und Lastsprünge auftreten, können die oben genannten Verdampfer hier nur bedingt eingesetzt werden, da diese aufgrund ihrer Bauweise überwiegend im stationären Betrieb eine gute Funktionsweise garantieren, für einen dynamischen Betrieb aufgrund von zu langen Ansprechzeiten jedoch häufig ungeeignet sind.

Es ist Aufgabe der Erfindung, einen einfachen und leicht zu realisierenden Aufbau einer Vorrichtung zum Verdampfen und/oder Überhitzen eines Mediums zu schaffen, der insbesondere unter dynamischen Betriebsbedingungen ein gutes und schnelles Verdampfen der jeweiligen Medienmenge ermöglicht und der darüber hinaus einfach und kostengünstig in seinem Aufbau und seiner Herstellung ist.

Erfindungsgemäß wird diese Aufgabe durch die im kennzeichnenden Teil von Anspruch 1 genannten Merkmale gelöst.

Dadurch, daß der Medienraum aus den beiden Folien des wenigstens einen Folienpaars gebildet wird, kann dieser Medienraum über in die jeweilige Folie eingebrachte Vertiefungen realisiert werden. Diese Vertiefungen können beispielsweise in eine oder auch beide der Folien des Folienpaares auf deren dem Medium zugewandten Oberflächen eingebracht sein. Als Fertigungsverfahren für die Herstellung der Vertiefung bietet sich insbesondere ein Ätzverfahren oder aber auch eine abtragende oder umformende Bearbeitung der jeweiligen Folien an. Dadurch ergibt sich zwischen den Folien ein vergleichsweise kleiner Medienraum, so daß in diesem vergleichsweise kleinen Medienraum das über die Eintrittsöffnung eingebrachte Medium, auch bei größeren Lastsprüngen in dem Volumenstrom des Mediums, mit geringen Totzeiten verdampft und/oder überhitzt werden kann.

Um die gewünschte Leistung der Vorrichtung zum Verdampfen zu realisieren, kann hier einfach die Anzahl der verbauten Folienpaare erhöht werden, bis die gewünschte Leistung übertragen werden kann.

Auf den dem Medium abgewandten Oberflächen wenigstens einer der Folien des Folienpaares sind dabei Wärmeleitrippen vorgesehen. Beim Einsatz von mehreren Folienpaaren können so Folienpaare und Wärmeleitrippen jeweils abwechselnd übereinander gestapelt und miteinander verbunden werden. Als besonders vorteilhaftes Fertigungsverfahren kann hierzu ein Lötverfahren eingesetzt werden. Die Wärmeleitrippen dienen insbesondere zur Vergrößerung der Wärmeübertragungsfläche und zur Turbulenzerzeugung.

Aufgrund der Größenunterschiede zwischen der Dimension der Wärmeleitrippen und der Vertiefungen in dem Medienraum ist die erfindungsgemäße Vorrichtung zum Verdampfen und/oder Überhitzen eines Mediums besonders gut geeignet, kleine Medienmengen je Folienpaar zu verdampfen und/oder zu überhitzen, wobei aufgrund der viel größeren Wärmeleitrippen an bzw. zwischen den jeweiligen Folienpaaren dies mit thermischer Energie aus einem vergleichsweise großen Volumenstrom eines Wärmeträgermediums erfolgen kann.

Dabei kann das wärmeträgerseitig die Vorrichtung durchströmende Wärmeträgermedium insbesondere ein heißes Gas sein, welches mit einem sehr viel größeren Volumenstrom als der des zu verdampfenden Mediums die Folienpaare umströmt und dabei zwischen den jeweiligen Wärmeleitrippen hindurchströmt. Dieser beispielsweise heiße Gasstrom kann dabei einen großen Teil der in ihm enthaltenen thermischen Energie auf die Wärmeleitrippen und damit die in wärmeleitendem Kontakt mit den Wärmeleitrippen stehenden Folien abgeben, so daß diese thermische Energie die auf das in dem Medienraum zwischen den beiden Folien des wenigstens einen Folienpaares befindliche Medium übertragen werden.

Die Erfindung weist damit eine ideale Kombination von einem vergleichsweise kleinen medienseitigen Bereich des Wärmetauschers mit einem möglichst großen wärmeträgerseitigem Bereich des Wärmetauschers auf. Damit ist eine sehr hohe Dynamik und ein sehr schnelles Verdampfen von sich sprungartig verändernden Mengen an zu verdampfendem Medium möglich. Gleichzeitig ist wärmeträgerseitig der Druckverlust gering. Insgesamt können hohe Reynolds- beziehungsweise Wärmeübergangszahlen realisiert werden.

Vorteilhafte Ausgestaltungen und Weiterbildungen der Erfindung ergeben sich aus den Unteransprüchen und dem anhand der Zeichnung nachfolgend prinzipmäßig dargestellten Ausführungsbeispiel.vEs zeigt:
- Fig. 1: einen Querschnitt durch eine erfindungsgemäße Vorrichtung zum Verdampfen und/oder Überhitzen eines Mediums;
- Fig. 2: eine Ausschnittsvergrößerung des Bereichs II in Fig. 1; und
- Fig. 3: einen Längsschnitt durch die erfindungsgemäße Vorrichtung.

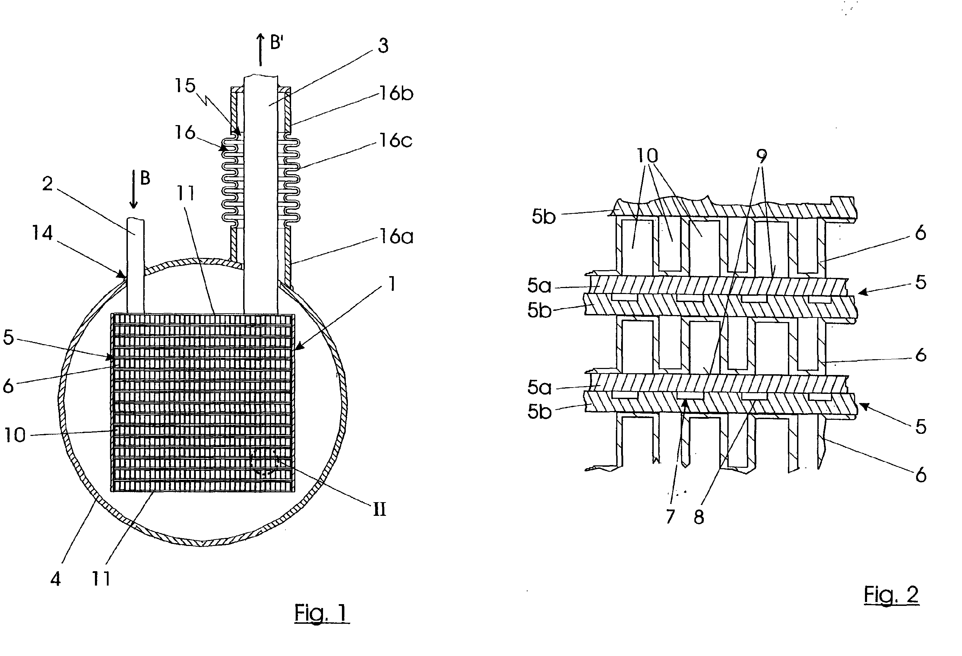

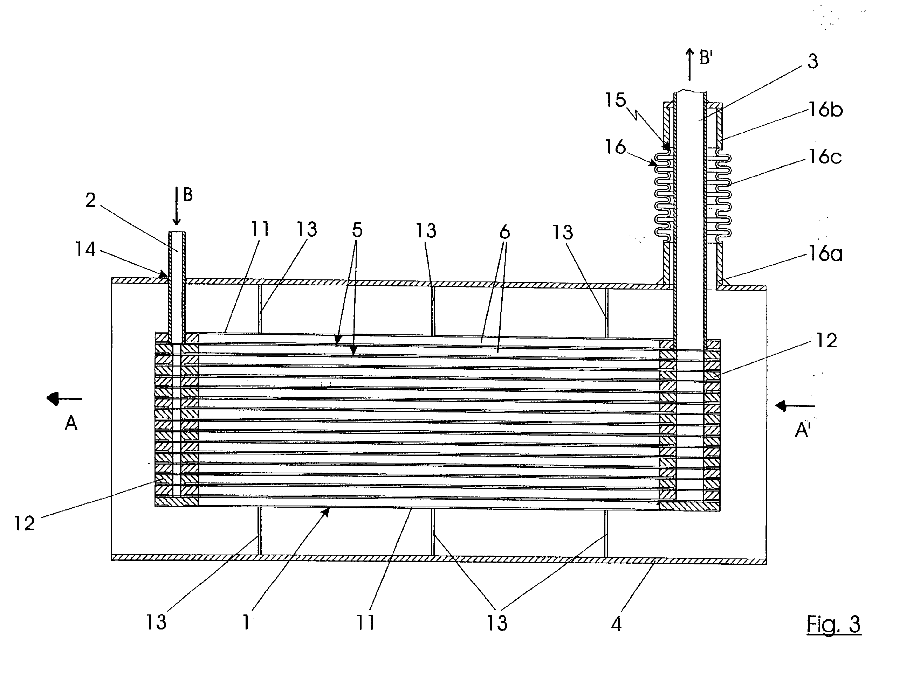

Fig. 1 zeigt einen Wärmetauscher 1 in einem Querschnitt. Der Wärmetauscher 1 ist dabei, wie später auch noch in Fig. 3 zu erkennen ist, als selbsttragendes Bauelement ausgebildet und über zwei Leitungselemente 2, 3 in einem Gehäuse 4 aufgehängt. Das Leitungselement 2 bildet dabei die Eintrittsöffnung für ein zu verdampfendes Medium B, während das Leitungselement 3 die Austrittsöffnung für den Dampf B' bildet. Der Wärmetauscher 1 selbst ist in seinem medienseitigen Bereich durch Folienpaare 5 aufgebaut, wobei zwischen den Folienpaaren 5 jeweils Wärmeleitrippen 6 angeordnet sind.

In Fig. 2 ist in einem vergrößerten Ausschnitt des Wärmetauschers 1 dessen Aufbau deutlich erkennbar. Die in Fig. 2 dargestellten Folienpaare sind aus jeweils zwei Folien 5a, 5b aufgebaut, wobei sich zwischen den beiden Folien 5a, 5b ein Medienraum 7 befindet, welcher über zahlreiche Vertiefungen 8 in der Folie 5b gebildet wird. Dieser Medienraum 7 eines jeden Folienpaares 5 ist jeweils mit dem die Eintrittsöffnung bzw. die Austrittsöffnung bildenden Leitungselementen 2 bzw. 3 verbunden.

In dem in Fig. 2 dargestellten Ausführungsbeispiel wird der Medienraum 7 über die in die Folie 5b eingebrachten, wie z.B. eingeätzten Vertiefungen 8 gebildet. Prinzipiell wäre es selbstverständlich auch denkbar, den Medienraum 7 über in die Folie 5a oder sowohl in die Folien 5a als auch in die Folie 5b eingebrachte Vertiefungen 8 auszubilden.

Insbesondere bei einer Herstellung der Vertiefungen 8 durch ein Ätz-, Abtragungs- oder Umformungsverfahren läßt sich Form, Größe und Tiefe sowie das flächige Layout der Vertiefungen 8 in der jeweiligen Folie 5b und/oder 5a praktisch annähernd beliebig gestalten und einfach herstellen.

Auf den dem Medienraum 7 abgewandten Oberflächen 9 sind jeweils die Wärmeleitrippen 6 angebracht. Die Wärmeleitrippen 6 stehen dabei in wärmeleitendem Kontakt zu den jeweiligen Folien 5a, 5b, was sich beispielsweise durch verlöten realisieren läßt. Im dargestellten Ausführungsbeispiel sind die Wärmeleitrippen aus zwischen den einzelnen Folienpaaren 5 eingelegten wellblechartigen Elementen ausgebildet. Prinzipiell wären auch sämtliche andere Ausführungsformen, wie z.B. auf die Folienpaare aufgelötete Rippen, Noppen, Kegel oder dergleichen denkbar.

Zwischen den Folienpaaren 5 und den Wärmeleitrippen 6 bilden sich Hohlräume 10 aus, die den wärmeträgerseitigen Bereich des Wärmetauschers 1 bilden. Durch diese Hohlräume 10 kann dann senkrecht zu der in Fig. 2 dargestellten Ebene ein Wärmeträgermedium, insbesondere ein gasförmiges Wärmeträgermedium A strömen.

Fig. 3 zeigt einen Längsschnitt durch den Wärmetauscher 1. Auch hier sind wieder mehrere Folienpaare 5 und die dazwischen angeordneten Wärmeleitrippen 6 erkennbar. Als oberen und unteren Abschluß des Wärmetauschers 1 ist jeweils eine einzelne Abschlußfolie 11 auf das abwechselnd aus den Folienpaaren und den Wärmeleitrippen gestapelte Paket aufgelegt. Um sicherzustellen, daß die Leitungselemente 2, 3 mit den jeweiligen Medienräumen 7 verbunden und gegenüber dem den Wärmetauscher 1 umgebenden Raum abgedichtet sind, sind zwischen den einzelnen Folienpaaren im Bereich der Leitungselemente 2, 3 Abstandshalter 12 angeordnet.

Das Gehäuse 4 weist in der Ebene senkrecht zu dem anströmenden Wärmeträgermedium A bzw. dem abströmenden Wärmeträgermedium A' wenigstens annähernd die Form eines Leitungselements, hier eines Rohrleitungselements mit rundem Querschnitt, auf. Der Aufbau aus Wärmetauscher 1 und Gehäuse 4 läßt sich so ohne weitere Druckverluste in eine bereits bestehende Rohrleitung vergleichbaren Durchmessers integrieren. Gleichzeitg bedingt die zylindrische Form des Gehäuses 4 ausreichende Stabilität bei vergleichsweise geringen Wandstärken, wodurch Kosten und Gewicht eingespart werden kann.

Es ist jedoch auch denkbar den Wärmetauscher 1 komplett ohne das Gehäuse 4 in einen Wärmeträgermedienstrom A zu bringen, oder das Gehäuse 4 mit senkrecht zu der eingezeichneten Strömungsrichtung des Wärmeträgermediums A bzw. A' mit Leitungselementen zur Versorgung mit dem Wärmeträgermedium zu versehen.

In dem in Fig. 3 dargestellten Ausführungsbeispiel sind Leitbleche 13 in das Gehäuse 4 eingepaßt. Die Leitbleche 13 sorgen dafür, daß der Volumenstrom des Wärmeträgermediums A den Bereich des Wärmetauschers 1 durchströmt und nicht etwa an dem Wärmetauscher 1 vorbeiströmt.

In dem dargestellten Ausführungsbeispiel ist der Wärmetauscher 1 dabei, wie oben bereits erwähnt, selbsttragend ausgeführt und an den beiden Leitungselementen 2, 3 in dem Gehäuse 4 befestigt. Bei dem Leitungselement 2, der Eintrittsöffnung für das zu verdampfende und/oder überhitzende Medium B handelt es sich bei der Befestigung prinzipmäßig um ein Festlager 14. Das Leitungselement 2 kann beispielsweise in dem Gehäuse 4 eingeschraubt oder verschweißt sein.

Das Leitungselement 3, die Austrittsöffnung für das verdampfte und/oder überhitzte Medium B', bildet dabei prinzipmäßig ein Loslager 15. Durch das Loslager 15 wird es möglich, daß sich das Leitungselement 3 und somit auch der Wärmetauscher 1 gegenüber dem Gehäuse 4 bewegen kann. Damit lassen sich durch die Erwärmung aufgrund des -heißen Wärmeträgermediums A verursachte Längenausdehnungen in dem Wärmetauscher 1 aufnehmen, ohne daß es zu größeren Materialspannungen in den Materialien des Wärmetauschers 1 kommt. Das Loslager ist dabei prinzipmäßig durch ein das Leitungselement 3 umgebendes Leitungselement 16 ausgebildet. Das Leitungselement 16 weist zwei starre Endstücke 16a, 16b auf, wobei zwischen den beiden starren Endstücken 16a, 16b ein flexibler Leitungsabschnitt 16c angeordnet ist. Dabei ist der dem Gehäuse zugewandte starre Abschnitt 16a des Leitungselements 16 fest mit dem Gehäuse 4 verbunden, z.B. verschweißt. Das Leitungselement 3 des Wärmetauschers 1 ist dagegen mit dem über den flexiblen Leitungsabschnitt 16c von dem starren Leitungsende 16a abgekoppelten Leitungsende 16b starr verbunden. Auch bei dieser Verbindung kann es sich beispielsweise um eine Schweißverbindung handeln. Dehnt sich nun der Wärmetauscher 1 aus, so kann dessen Längenänderung in dem Gehäuse 4 über das Loslager 15 bzw. über den flexiblen Leitungsabschnitt 16c ausgeglichen werden. Dadurch werden Materialspannungen aufgrund der thermischen Längenausdehnung des Wärmetauschers 1 verhindert.

Der Aufbau des Wärmetauschers ist dabei von großer Flexibilität, da je nach gewünschter, zu übertragender Leistung lediglich die Anzahl an Folienpaaren 5 und Wärmeleitrippen 6 angepaßt werden muß. Prinzipiell kann der Wärmetauscher 1 dann in jedes dafür mit seinem Durchmesser geeignetes Leitungselement als Gehäuse 4 eingesetzt werden und kann so problemlos in ein bestehendes System integriert werden.

Aufgrund der Größenunterschiede zwischen den vergleichsweise kleinen Vertiefungen 8 des Medienraums 7 und den vergleichsweise großen Wärmeleitrippen 6 kann ein sehr dynamisches Ansprechverhalten des Wärmetauschers 1, beispielsweise bei schlagartigen Lastwechseln bzw. Wechseln der zu verdampfenden Medienmenge des Mediums B, realisiert werden. Gleichzeitig wird der Druckverlust auf der Wärmeträgerseite reduziert. Die beschriebene Vorrichtung wird vorzugsweise in Brennstoffzellensystemen zum Verdampfen und/oder Überhitzen von Edukten eingesetzt. Aus diesen verdampften Edukten, vorzugsweise ein Kohlenwasserstoff oder Kohlenwasserstoff/Wassergemisch, wird dann in einem sogenannten Gaserzeugungssystem der für die Brennstoffzelle benötigte Wasserstoff erzeugt. In diesem Fall wird auf der Wärmeträgerseite vorzugsweise das Brennstoffzellenabgas verwendet.

## Patentansprüche

1. Vorrichtung zum Verdampfen und/oder Überhitzen eines Mediums, insbesondere eines Kohlenwasserstoffs oder eines Kohlenwasserstoff/Wasser-Gemischs für ein Gaserzeugungssystem einer Brennstoffzellen-Anlage, mit einem Wärmetauscher der in seinem medienseitigen Bereich wenigstens ein Folienpaar sowie jeweils wenigstens eine Eintritts-und eine Austrittsöffnung, welche jeweils mit einem Medienraum zwischen den beiden Folien des wenigstens einen Folienpaars verbunden sind, aufweist, und wobei der medienseitige Bereich in einem wärmeleitenden Kontakt zu einem wärmeträgerseitigen Bereich steht,
**dadurch gekennzeichnet**, daß
der Medienraum (7) zwischen den beiden Folien (5a,5b) durch auf der dem Medium zugewandten Seite wenigstens einer der Folien (5b) eingebrachte Vertiefungen (8) gebildet ist, wobei die dem Medium abgewandte Oberfläche (9) jeweils wenigstens einer der Folien (5a,5b) des wenigstens einen Folienpaars (5) mit Wärmeleitrippen (6) versehen ist, wobei die Höhe der Wärmeleitrippen (6) größer als die Tiefe der Vertiefungen (8) ist.

2. Vorrichtung nach Anspruch 1,
**dadurch gekennzeichnet**, daß
die Wärmeleitrippen (6) als auf wenigstens einer Seite der den jeweiligen Folienpaaren (5) angeordnete, wellblechartige Elemente ausgebildet sind.

3. Vorrichtung nach Anspruch 1 oder 2,
**dadurch gekennzeichnet**, daß
der Wärmetauscher (1) mittels Eintritts- und Austrittsöffnungen bildenden Leitungselementen (2,3) selbsttragend in einem Wärmeträger-Volumenstrom (A) befestigbar ist.

4. Vorrichtung nach Anspruch 1,
**dadurch gekennzeichnet**, daß der Wärmetauscher (1) ein im wesentlichen zylindrisches Gehäuse (4) aufweist.

5. Vorrichtung nach Anspruch 4,
**dadurch gekennzeichnet**, daß das Gehäuse (4) Leitbleche (13) aufweist.

6. Vorrichtung nach Anspruch 3,
**dadurch gekennzeichnet**, daß der Wärmetauscher (1) an einem der Leitungselemente (2) mittels eines Festlagers (14) und an dem anderen Leitungselement (3) mittels eines Loslagers (15) aufgenommen ist.

7. Vorrichtung nach Anspruch-6,
**dadurch gekennzeichnet**, daß
das über das Loslager (15) aufgenommene Leitungselement (3) von einem weiteren mit dem Gehäuse (4) verbundenen Leitungselement (16) umgeben ist, wobei dieses Leitungselement (16) in Strömungsrichtung wenigstens einen flexiblen Leitungsabschnitt (16c) aufweist und wobei das Leitungselement (3) an dem das Leitungselement (3) umgebenden Leitungselement (16) auf der dem Wärmetauscher (1) abgewandten Seite (16b) des flexiblen Abschnitts (16c) befestigt ist.
